# EUROPEAN PATENT APPLICATION

(11) **EP 4 832 282 A1**
(43) Date of publication of application: **28.10.2026**
(21) Application number: 25172633.7
(22) Date of filing: 25.04.2025
(51) Int. Cl.: H02H 3/30, H02H 7/26, H02H 3/28

(54) **METHOD AND SYSTEM FOR SECURITY ENHANCEMENT OF DIFFERENTIAL PROTECTION**

(71) Applicant: Hitachi Energy Ltd, 8050 Zürich (CH)
(72) Inventor: Tajdinian, Mohsen, 723 46 Västerås (SE); Wang, Jianping, 724 60 Västerås (SE); Gore, Rahul, 12834 Stockholm (SE)
(74) Representative: AWA Sweden AB

(57) **Abstract**

The present disclosure relates to a method for differential protection of a power line (PL) electrically connected between a first substation (10₁) and a second substation (10₂) of an electrical power system (EPS), the method implemented by at least a first protective relay arranged at the first substation (10₁), the method comprising: receiving local current data indicative of a local current *I*_{x,local} in the power line (PL) at the first substation (10₁) and remote current data indicative of a remote current *I*_{x,remote} in the power line (PL) at the second substation (10₂); determining whether a plurality of internal fault conditions are satisfied based on a comparison of said local current data and said remote current data, and if said plurality of internal fault conditions is satisfied, generating a first tripping signal to a first circuit breaker (CB₁) to disconnect the power line (PL) from the first substation (10₁), wherein said plurality of internal fault conditions comprises: at least one internal fault discrimination condition comprising a first internal fault discrimination condition given by *IEFD*_{x,local} *or IEFD*_{x,remote} > *IEFD*_{Th,x} wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} , {IEFD}_{x , remote} = \frac{\left|{I}_{x , remote}\right|}{\left|{I}_{x , local}\right|}$ wherein *IEFD*_{Th,x} corresponds to an IEFD index threshold indicative of an internal fault. A differential protective system and an electrical power system are also disclosed.

## Description

### Technical Field

The present disclosure relates to a method and system for security enhancement of differential protection, and an electrical power system comprising said system.

### Background

In electrical power systems, charging currents arise due to a capacitive reactance of conductors in power lines. A magnitude of a charging current depends on factors such as voltage level, power line length, conductor spacing within the power line, and ground distance. For overhead lines, the charging current is typically around 1 A/km. The behaviour of the charging current can be modelled using the π-model, where shunt capacitance is lumped at both ends, and resistance and reactance are evenly distributed along the line. In this model, the charging current flows through the shunt capacitances. Due to its presence and variability, charging current can lead to maloperation of differential protection, especially when not compensated, as it may interfere with fault detection and response. A conventional compensation method includes adjusting a fixed detection threshold to prevent operation due to charging current. However, this can reduce an ability of detecting actual internal faults. Alternatively, a compensation method may involve using microprocessor-based relays that subtract a calculated charging current. However, these approaches can still cause maloperation of protective relays, particularly in grids with large-scale wind farms. Increased transmission distances and weak wind farm output can trigger incorrect differential protection operations due to transient capacitive currents.

Additionally, current transformer (CT) saturation can distort a secondary current of a CT, affecting differential protection schemes. Saturation can result from large fault currents, decaying DC components, remnant flux, or excessive secondary loop resistance. Decaying DC components - a DC offset in fault currents -may cause prolonged saturation. Remnant flux in a core of the CT after a fault affects responsiveness to subsequent faults. Excessive secondary loop resistance increases voltage drop, exacerbating saturation.

In view of the above, there is a need for improved differential protection.

### Summary

It is an object of the present disclosure to provide an improved solution that alleviates at least some drawbacks with present solutions or improves over present solutions in at least one aspect or provides an alternative over present solutions in at least one aspect. This and/or at least one other object, which will be implicitly or explicitly detailed in the following disclosure, is solved by one or more of the inventions defined in the claims. Additional advantageous embodiments are described in the following.

The present disclosure is based on the inventors' realization that a method for differential protection may be enhanced by implementing at least one internal fault condition based on utilizing internal/external fault discrimination (IEFD) indices based on magnitudes of local and remote currents. This allows for a reliable way of distinguishing between internal faults and external faults. Moreover, IEFD indices may advantageously be used to resolve disturbances (e.g., caused by CT saturation) as external faults, which can otherwise cause false tripping during external faults in conventional methods of differential protection.

The differential protection method disclosed herein may be applied to various types of power lines. A power line typically comprises one or more conductors for transmitting electrical power between substations or other points in the grid. In a three-phase system, a power line may include three conductors, each carrying a respective phase of alternating current (AC), typically referred to as Phase A, Phase B, and Phase C. The differential protection method described herein can be applied to monitor and compare the currents in each phase across these conductors, allowing for accurate fault detection and system protection regardless of the specific configuration of the power line.

The method for differential protection disclosed herein is used for providing differential protection to at least one component within a protected zone. The protected zone is bounded by circuit breakers which may upon activation isolate the protected zone. Although the following is described in the context of differential protection of a power line between two substations, the method for differential protection may be applicable to any component electrically connected between two circuit breakers.

The term substation may refer to any physical or functional arrangement of electrical components-whether fixed or mobile, centralized or distributed-that comprises means for differential protection, such as a protective relay and a circuit breaker, but optionally also a current transformer and/or a voltage transformer. A substation may be a traditional facility or a standalone arrangement. Two or more substations may define a protected zone between them, which can be isolated by corresponding two or more circuit breakers.

According to a first aspect of the present disclosure, a method for differential protection of a power line is provided. The power line is electrically connected between a first substation and a second substation of an electrical power system. The method is implemented by at least a first protective relay arranged at the first substation. The method comprises: receiving local current data indicative of a local current *I*_{x,local} in the power line at the first substation and remote current data indicative of a remote current *I*_{x,remote} in the power line at the second substation. The method comprises: determining whether a plurality of internal fault conditions is satisfied based on a comparison of said local current data and said remote current data. The method comprises: if said plurality of internal fault conditions is satisfied, generating a first tripping signal to a first circuit breaker to disconnect the power line from the first substation. The plurality of internal fault conditions comprises: at least one internal fault discrimination condition comprising a first internal fault discrimination condition given by ${IEFD}_{x , local} or {IEFD}_{x , remote} > {IEFD}_{Th , x}$
wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , remote} = \frac{\left|{I}_{x , remote}\right|}{\left|{I}_{x , local}\right|}$
wherein *IEFD*_{Th,x} corresponds to an IEFD index threshold indicative of an internal fault. Further, *x* indicates any one phase of a power line (e.g., one of phase A, phase B, phase C, in a three-phase electrical power system).

The method may advantageously improve security enhancement of differential protection. As the method utilizes IEFD indices to resolve internal/external faults, the method can resolve disturbances (e.g., caused by CT saturation) as external faults, which can otherwise cause false trips during external faults in conventional methods of differential protection. Further, the method may advantageously be used for differential protection of Medium Voltage (MV) power lines.

The plurality of internal fault conditions may comprise at least one internal fault detection condition. An internal fault detection condition may serve as a primary condition for detecting an internal fault. The at least one internal fault discrimination condition may be used to discriminate whether an internal fault detection corresponds to a fault caused by a true internal fault or an erroneous detection, e.g., due to CT saturation. The at least one internal fault detection condition may comprise a first internal fault detection condition and at least a second internal fault detection condition.

For internal faults, a magnitude of a local current (measured at the first substation) and a magnitude of a remote current (measured at the second substation) may be different. ${I}_{x , local} \neq {I}_{x , remote}$

As a first non-limiting example, a first internal fault detection condition may be based on the above observation, e.g., if the magnitude of one of the measured currents is higher than a threshold setting, such as 1.5 p.u. ${I}_{x , local} > 1.5 p . u .$ or ${I}_{x , remote} > 1.5 p . u$

As a second non-limiting example, a second internal fault detection may be based on whether a differential current exceeds a restraint current. The differential current *Diff_I*ₓ may be determined as the absolute value of a difference between an absolute value of the local current and an absolute value of the remote current. $Diff _ {I}_{x} = \left|\left|{I}_{x , local}\right|-\left|{I}_{x , remote}\right|\right|$

The restraint current may be determined as the maximum of an absolute value of the local current and an absolute value of the remote current multiplied by a scaling factor *Kᵣ* and optionally adjusted by a constant C $Restraint _ {I}_{x} = {K}_{r} \times Maximum \left\{\left|{I}_{x , local}\right|, \left|{I}_{x , remote}\right|\right\} + C$

The first internal fault detection condition and the second internal fault detection condition may be used in combination $\left\{\begin{matrix}if Diff _ {I}_{x} > Restraint _ {I}_{x} and \\ {I}_{x , local} > 1.5 p . u or {I}_{x , remote} > 1.5 p . u\end{matrix}\right.$

By taking into account a differential current and a restraint current, the method may also advantageously facilitate distinguishing between internal faults and external faults. This may reduce the risk of maloperation, i.e., that a protective relay generates a tripping signal to a circuit breaker to disconnect the power line (or a component in general) for external faults rather than for internal faults. The restraint current may represent a reference current entering and leaving a protected zone and provides a threshold to differentiate between internal faults and external faults or inrush currents. If the differential current exceeds a certain proportion of the restraint current, the protective relay generates the tripping signal to at least the first circuit breaker (optionally to any circuit breakers required to be activated to isolate the protected zone); otherwise, it avoids generating the tripping signal, i.e., the protective relay restrains the tripping, to avoid unnecessary activation. The restraint current may facilitate a protective relay to only respond to internal faults.

As an alternative to differential current and restraint current, the method may alternatively, or in combination, comprise calculating a differential active power and a restraint active power. In such a case, the method comprises receiving local current and voltage data indicative of a local current and a local voltage in the power line at the first substation and remote current and voltage data indicative of a remote current and a remote voltage in the power line at the second substation.

The method may implement phasor-based differential protection. Voltages, currents, or active power, etc., may be described using phasors. The method may comprise communicating at least one phasor quantity between a first protective relay and a second protective relay, meaning that a local protective relay may obtain at least one remote phasor quantity from a remote protective relay or vice versa.

To determine a phasor quantity for a given power line or a phase thereof, the corresponding quantity is measured.

For instance, a current may be based on a current measurement provided by means of a current transformer (CT). The CT generates a secondary current proportional to a primary current in the power line. The current waveform is then sampled locally at a sufficiently high sampling frequency, typically in the range between 1 kHz to 4 kHz sampling frequency or more. This may ensure accuracy of the measurements, particularly in systems with higher frequencies or fast transients.

The sampled current data may then be processed using a Fast Fourier Transform (FFT) (e.g., in discrete form) to convert the time-domain current waveform into the frequency domain. The FFT identifies the amplitude and phase of each frequency component of the current, allowing for the extraction of the fundamental frequency component (e.g., 50 or 60 Hz in most power systems).

From the FFT results, the magnitude of the fundamental frequency component may be extracted. The phase angle of the fundamental frequency component is also extracted from the FFT (e.g., in discrete form), indicating the phase shift relative to a reference signal (such as a voltage reference obtained via a voltage transformer, VT).

The current phasor may then be represented as a complex number as: ${I}_{x , local} = {I}_{x , local} ∠ {θ}_{x , local}$ wherein
*I*_{x,local} is the magnitude of the local current, and
*θ*_{x,local} is the phase angle of the current relative to the reference.

A local current phasor may be determined by a protective relay based on local current measurements. Alternatively, a local current phasor may be determined by a phasor measurement unit, PMU, which may be separate from or integrated with the local protective relay. Current measurements obtained via the CT may be fed into the PMU, which then calculates the phasor representation of the current. In this way, CTs may be used to measure the current, and PMUs may be used to convert this current measurement into a current phasor.

A voltage may be based on a voltage measurement provided by means of a voltage transformer (VT). A phasor of the voltage may be determined using a process similar as, or analogue to, the process described in relation to the current phasor. An active power phasor may be calculated based at least on the current phasor and the voltage phasor. Local phasors and remote phasors may each be determined using the approach above.

According to one embodiment, the IEFD index threshold is a predetermined IEFD index threshold. In a non-limiting example, the IEFD index threshold may be set equal to 2. However, the IEFD index threshold may be selected to any other appropriate value, such as a value in an interval of 1.1 to 3 or more than 3.

According to one embodiment, the IEFD index threshold is an adaptive IEFD index threshold based at least on the local current data and the remote current data. The adaptive IEFD index threshold may be dynamically updated over time based on the local current data and the remote current data.

According to one embodiment, the adaptive IEFD index threshold is updated by ${IEFD}_{Th , x} = {IEFD}_{Th , x , 0} + \left(1-max\left(Δ{IEFD}_{x , local},Δ{IEFD}_{x , remote}\right)\right)$
wherein *IEFD*_{Th*,*x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$
wherein *IEFD*_{*x*,local,i} and *IEFD*_{x,local,i} correspond to samples of the respective IEFD indices and N indicates the number of samples. The predetermined initial threshold *IEFD*_{Th,x,0} may be selected to an appropriate level. By the adaptive IEFD index threshold above, the method may thus advantageously revise the threshold based on present operating conditions.

According to one embodiment, the local current data and the remote current data comprise sample-based values and/or phasor-based values of the local current and the remote current, respectively. By communicating phasor-based values between protective relays, impact of time synchronization issues may be reduced, which may advantageously improve accuracy of the method for differential protection.

According to one embodiment, the local current data and the remote current data comprise phasor-based values of the local current and the remote current, respectively, wherein said at least one internal fault discrimination condition comprises a second internal fault discrimination condition indicating whether the local IEFD index and the remote IEFD index account for current transformer, CT, saturation.

If a CT becomes saturated, current signals from local and/or remote substation may become distorted. As a result, the signal may become deformed from a typical sinusoidal waveform. Therefore, characteristics of sinusoidal waveform may be affected. Among the characteristics, frequency is not impacted immediately by CT saturation (at least for few cycles after fault). The method may advantageously implement an index-based detection parameter for indicating a detection of CT saturation. The CT saturation index may be formulated as ${\overline{f}}_{saturation} = {\sum }_{k = 1}^{K} \frac{\left|{f}_{k}-{f}_{0}\right|}{K}$ wherein *f*₀ corresponds to fundamental frequency of the local and remote current being measured, *fₖ* corresponds to each frequency component, and K indicates a size of a window for which the difference between each frequency component *fₖ* and the fundamental frequency *f*₀ is averaged. As a non-limiting example, K is selected to provide a window having a size corresponding to a half-cycle of the fundamental frequency.

Without saturation, the frequency is almost constant and the value *f̅ₛₐₜᵤᵣₐₜᵢₒₙ* is approximately zero. However, if CT saturation occurs, the estimated frequency become oscillating and therefore, the deviation from fundamental frequency becomes significant. If CT saturation is detected, fast current magnitude estimation is preferred. If CT saturation is not detected, the method may proceed with processing local and remote current measurements for the purpose of detecting internal/external faults. Therefore, this CT saturation index may indicate whether there is a risk that detection for internal faults may be accurate or not. The method may comprise delaying computation for internal/external fault detection and/or discrimination based in this index, which may advantageously reduce computational burden. Moreover, the CT saturation index may be applied for each phase separately.

As a non-limiting example, the local IEFD index and the remote IEFD index may account for CT saturation by being determined for a stable region of CT saturation. Regardless of cause of CT saturation, in terms of depth of saturation, there are different types of CT saturation including deep, normal and partial saturation. Among these types of CT saturation, deep saturation is a type of CT saturation that can happen in an initial stage of a fault, e.g., during the first 3 ms or so after the fault. Although the likelihood of such a case may be rare, the method may advantageously be improved so that the local IEFD index and the remote IEFD index are determined for a stable region after this initial stage to avoid miscalculations during a deep CT saturation.

According to one embodiment, the method is adapted so that, during an event of CT saturation, a fundamental component of a fault current is determined. A fault current may be the difference between or sum of local current and remote current for each phase. During an event of CT saturation, voltage and current signals do not remain sinusoidal, introducing an exponentially decaying DC component, respectively. The decaying DC component of the current and the voltage may respectively be approximated by means of Taylor expansion. The Taylor expansion may thereafter be solved in terms of unknown components based on fitting with the current and voltage respectively.

As a non-limiting example, the Taylor expansion may be rewritten in matrix format and solved by a least squares (LS) method. The latter may advantageously provide a fast solution for determining the fundamental component of the fault current. LS method is a non-limiting example for solving the matrix representation of the Taylor expansion. Nevertheless, any other technique with suitable performance can be substituted to extract the parameters of interest.

According to one embodiment, the method is adapted so that, during an event of CT saturation, a sampling rate of the local current *I*_{x,local} and the remote current *I*_{x,remote} is selected based on at least one characteristic of the CT saturation. As a non-limiting example, the sampling rate is equal to or greater than 4.8 kHz.

According to one embodiment, the method comprises determining the local **IEFD** index and the remote **IEFD** index when a fault current (*i*_{f}) in the power line satisfies a stable fault current condition indicative of a stable fault current, which stable fault current condition is given by ${σ}_{{I}_{1}} < {σ}_{Ref}$ ${I}_{1 , m} > {I}_{1 , Ref}$ wherein *σ*_{*I*₁} corresponds to a standard deviation of the fault current, *σ*_{Ref} corresponds to a predetermined reference value for said standard deviation of the fault current, *I*_{1,m} corresponds to a magnitude of the fault current, and *I*_{1,Ref} corresponds to a predetermined reference value for said magnitude of the fault current.

As a non-limiting example, a straightforward index for detecting the stable region may be based on a standard deviation ${σ}_{{I}_{1}} = \sqrt{{\sum }_{m = 1}^{M} \frac{{\left({I}_{1 , m}-{\overline{I}}_{1 , m}\right)}^{2}}{M}}$ ${\overline{I}}_{1 , m} = {\sum }_{m = 1}^{M} \frac{{I}_{1 , m}}{M}$ wherein *M* is the number of samples for deciding whether an estimated magnitude of the fault current has become stable. The stable region is selected if the following condition is satisfied: ${σ}_{{I}_{1}} < {σ}_{Ref}$ ${I}_{1 , m} > {I}_{1 , Ref}$ where ${σ}_{Ref} = {K}_{σ} {σ}_{PF}$ ${I}_{1 , Ref} = {K}_{1} {I}_{1 , PF}$ where *σ_{PF}* is the pre-fault standard deviation for the current magnitude of a phase x, *I*_{1,*PF*} is the pre-fault current magnitude of phase x, and *K_{σ}, K*₁ are constants that may be specified in terms of value. The constants *K_{σ}, K*₁ may represent scaling factors and their values may be selected within an interval 1 to 2 or more than 2. As a non-limiting example, *K_{σ}* and/or *K*₁ may be equal to or greater than 2, which may advantageously improve accuracy in calculations or effects due to overload. In other words, the stable region is identified if the standard deviation of the estimated magnitude becomes lower than the reference value of the standard deviation, and simultaneously, the magnitude of the fault current becomes greater than the reference value of the magnitude of the current signal.

According to one embodiment, the method is implemented by the first protective relay and a second protective relay, wherein the first tripping signal is generated by the first protective relay to activate the first circuit breaker and a second tripping signal is generated by the second protective relay to activate a second circuit breaker for disconnecting the power line from the second substation.

According to one embodiment, the first tripping signal and the second tripping signal are only generated when the first protective relay and the second protective relay have exchanged information indicating that at least one of the first protective relay and the second protective relay has determined that the at least one internal fault condition is satisfied. In this way, the protective relays may reach consensus whether there is an internal fault, and then generate the respective tripping signals to activate the respective circuit breakers.

According to one embodiment, a communication link between the first substation and the second substation is established via a non-dedicated communication network or an optical fibre cable. A communication link may be established between protective relays of an electrical power system to enable real-time data exchange for fault detection, isolation, and power network protection. The communication link may be implemented via fibre optics, or wireless communication, facilitating coordination of relay operations. The protective relays may exchange a local current phasor with one another, so that each protective relay obtains a local current phasor and a remote current phasor. The protective relay implementing the method may monitor characteristics of the non-dedicated communication network, such as latency.

According to one embodiment, the method is applied for each phase of currents in the power line comprising A, B, C three phase conductors. The method may be applied individually to each phase current in the power line to detect and isolate faults occurring in one or more phases.

According to a second aspect of the present disclosure, a differential protective system for differential protection of a power line is provided. The power line is electrically connected between a first substation of an electrical power system and a second substation, the differential protective system configured to be arranged at the first substation and be communicatively connected to at least a first circuit breaker for disconnecting the power line from the first substation, the protective system comprising: at least one protective relay configured to perform the method according to the first aspect or any embodiment thereof.

The protective system may be configured to communicate with a corresponding protective system at a second substation via a communication link to exchange current phasor measurements.

The protective system may be configured to measure and compare phase currents for each phase of the power line to detect differential current indicative of an internal fault condition or an external fault condition. Alternatively, or in combination, the protective system may be configured to measure and compare active power for each phase of the power line to detect differential active power indicative of an internal fault condition or an external fault condition.

The protective system may be operatively connected to a circuit breaker and configured to generate a tripping signal when the differential current exceeds a predefined threshold. The tripping signal may be generated by a protective relay of the protective system.

The protective system may comprise a current transformer (CT), such as the CT described in the context of the first aspect of the disclosure. The protective system may comprise a phasor measurement unit (PMU), such as the CT described in the context of the first aspect of the disclosure. The protective system may comprise a communication interface configured to be communicatively connected to the protective relay and allow communication between the protective relay and the communication link. The protective system may comprise a voltage transformer (VT), such as the VT described in the context of the first aspect of the disclosure.

According to a third aspect of the present disclosure, an electrical power system is provided. The electrical power system comprises: a first substation comprising a first circuit breaker; a power line configured to be electrically connected between the first substation and a second substation, and the differential protective system according to the second aspect or any embodiment thereof, wherein a first protective relay of the at least one protective relay is arranged at the first substation.

According to one embodiment, the electrical power system comprises the second substation, wherein a second protective relay of the at least one protective relay is arranged at the second substation. The second protective relay may be comprised in a second protective system configured to be arranged at the second substation. The second protective system may be configured as the first protective system.

According to one embodiment, the power line is a medium voltage, MV, power line, a low voltage, LV, power line, or a high voltage, HV, power line.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts. HV may however refer to electrical voltage levels equal to or greater than 115 kV.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads. MV may however refer to electrical voltage levels equal to or greater than 10 kV but less than 66 kV (and HV being equal to or greater than 66 kV).

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries. However, LV may refer to 1000V or less (in which case MV is at least greater than 1000V but less than 35 kV or 66 kV).

Any one power line connected between the first substation and the second substation may be any one of a HV, MV, or LV power line.

In particular, the method for differential protection of the present disclosure is advantageous for differential protection of a MV power line.

According to a fourth aspect, a computer program is provided. The computer program comprises instructions which, when the program is executed by a computer, cause the computer to carry out the method according to the first aspect or any embodiments thereof.

According to a fifth aspect, a computer-readable storage medium is provided. The computer-readable storage medium comprises instructions which, when executed by a computer, cause the computer to carry out the method according to the first aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only and is not intended to be limiting. It may be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1a schematically illustrates a portion of an electrical power system comprising a power line comprising A, B, C phase conductors, and at least a first substation electrically connected to a second substation, and protective relays arranged at the respective substation implementing a method for differential protection according to some embodiments;
Fig. 1b schematically illustrates an electrical power system according to some embodiments, wherein the electrical power system comprises a protected component within a protected zone bounded by two circuit breakers;
Fig. 1c schematically illustrates a π-model of a power line;
Fig. 2a schematically illustrates a flow chart of at least a portion of a method for differential protection according to some embodiments;
Fig. 2b schematically illustrates a flow chart of at least a portion of a method for differential protection according to some embodiments;
Fig. 3 schematically illustrates a flow chart of at least a portion of a method for differential protection according to some embodiments;
Figs. 4a and 4b illustrate graphs of various aspect of the electrical power system when at least partially protected by a method for differential protection according to some embodiments;
Fig. 5 illustrates graphs of various aspect of the electrical power system when at least partially protected by a method for differential protection according to some embodiments, and
Fig. 6 illustrates graphs of various aspect of the electrical power system when at least partially protected by a method for differential protection according to some embodiments.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

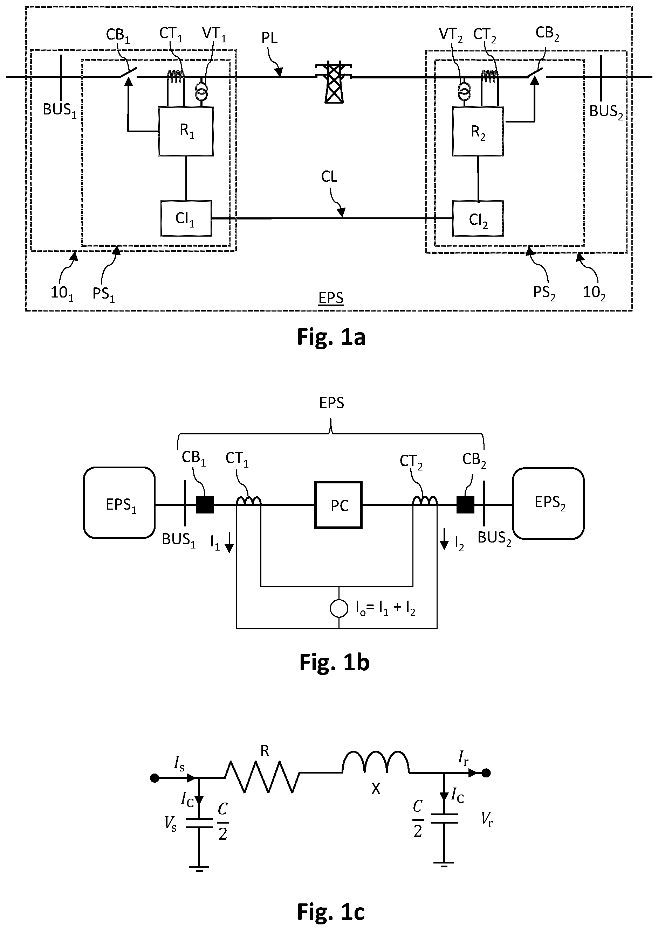

Fig. 1a schematically illustrates a portion of an electrical power system EPS comprising a power line PL. As a non-limiting example, the power line PL comprises A, B, C three phase conductors. However, the power line PL may comprise any other number of phase conductors. The electrical power system EPS comprises at least a first substation 10₁ configured to be electrically connected to a second substation 10₂. The electrical power system EPS comprises at least a first protective relay R₁ arranged at the first substation 10₁ implementing a method for differential protection according to any one embodiment of the present disclosure. A second protective relay R₂ may be arranged at the second substation 10₂. The electrical power system EPS may comprise the second substation 10₂. According to a non-limiting example, the power line PL is a medium voltage, MV, power line.

The first protective relay R₁ is comprised in a first protective system PS₁. The first protective system PS₁ may comprise at least one current transformer, CT₁. Each current transformer of the first protective system PS₁ may be configured to provide a current measurement of a respective phase current in the power line PL at the first substation 10₁. The first protective system PS₁ may comprise at least one voltage transformer, VT₁. Each voltage transformer of the first protective system PS₁ may be configured to provide a voltage measurement corresponding to a phase voltage associated with the respective phase current in the power line PL at the first substation 10₁. The current measurement(s) and the voltage measurement(s) provided by the current transformer(s) and voltage transformer(s) of the first protective system PS₁ may be referred to as local current and voltage data.

Likewise, the second protective relay R₂ may be comprised in a second protective system PS₂. The second protective system PS₂ may comprise at least one current transformer, CT₂. Each current transformer of the second protective system PS₂ may be configured to provide a current measurement of a respective phase current in the power line PL at the second substation 10₂. The second protective system PS₂ may comprise at least one voltage transformer, VT₂. Each voltage transformer of the second protective system PS₂ may be configured to provide a voltage measurement corresponding to a phase voltage associated with the respective phase current in the power line PL at the second substation 10₂. The current measurement(s) and the voltage measurement(s) provided by the current transformer(s) and voltage transformer(s) of the first protective system PS₁ may be referred to as remote current and voltage data.

The first protective relay R₁ may receive remote current and voltage data via a communication link CL, which may be an optical fiber cable or a non-dedicated communication network (such as ethernet-based communication network or a cloud-based communication network). The first protective relay R₁ may be configured to be communicatively connected to the communication link via a first communication interface CI₁. The second protective relay R₂ may be configured to be communicatively connected to the communication link via a second communication interface CI₂. The second protective relay R₂ may receive the local current and voltage data via the communication link CL. The first protective relay R1 may implement the method for differential protection of the present disclosure according to any one embodiment thereof. The second protective relay R2 may implement the method for differential protection of the present disclosure according to any one embodiment thereof. For the second protective relay R2, then the local and remote data or parameters may be reversed (i.e., the remote current and voltage data for the first protective relay R₁ is the local current and voltage data for the second protective relay R₂).

The first protective relay R₁ may be configured to be communicatively connected to a first circuit breaker CB₁. The second protective relay R₂ may be configured to be communicatively connected to a second circuit breaker CB₂. The first protective relay R₁ and the second protective relay R₂ may cooperate to provide differential protection of the power line PL. When the method for differential protection implemented by the first protective relay R₁ or the second protective relay R₂ detects a disturbance as an internal fault, then the respective protective relay may generate a tripping signal to active the corresponding circuit breaker CB₁, CB₂.

Also, as illustrated in Fig. 1a, the electrical power system may comprise a first bus BUS₁ and a second bus BUS₂ by which the electrical power system may electrically connect with other electrical power systems. In an electrical power system, a bus is a conductive node that serves as a central junction for distributing electrical power among various system components, including generators, transformers, transmission lines, and loads. A bus may thus provide a common electrical connection point and facilitates efficient power flow management within a substation or distribution network. A bus is typically formed from high-conductivity materials such as copper or aluminum and is designed to handle high current levels while maintaining system stability and reliability. Depending on the system requirements, the bus configuration may include single or multiple parallel conductors and may support various topologies, such as single bus, double bus, ring bus, or breaker-and-a-half arrangements, to optimize redundancy, flexibility, and fault tolerance.

Fig. 1b schematically illustrates a portion of an electrical power system EPS. The EPS comprises at least one protected component, PC, which is electrically connected between a first electrical power system EPS₁ and a second electrical power system EPS₂ via a first circuit breaker CB₁ and a second circuit breaker CB₂, respectively. The protected component PC may be protected by a differential protection method according to any one embodiment of the present disclosure. A first current I₁ may be measured by a first current transformer CT₁. A second current I₂ may be measured by a second current transformer CT₂. The differential protection method may consider a combined current, referred to as an operating current I_{O}, which may be determined as the sum of the first current I₁ and the second current I₂. The electrical power system EPS comprises a first bus BUS₁ and a second bus BUS₂ by which the electrical power system EPS may electrically connect with other electrical power systems, e.g., a first electrical power system EPS₁ and a second electrical power system EPS₂, respectively. In Fig. 1b, the first substation and the second substation are omitted for simplicity.

Fig. 1c schematically illustrates a *π*-model of a power line. Charging current may exist in all power lines due to an inherent capacitive reactance of conductors of power lines. As the charging current enters the power line from each end and escapes through the distributed capacitance, the charging current appears as a standing differential current to a protective relay implementing the method for differential protection herein disclosed. If there is a significant amount of charging current, it is necessary to adapt the method to prevent a maloperation of differential protection, i.e., that a protective relay generates a tripping signal to a circuit breaker for an external fault rather than an internal fault. For this reason, charging current compensation may be advantageously implemented. The amount of charging current in a power line depends on the voltage level, power line length, spacing between conductors (if applicable), and distance from the power line to the ground. Charging current may exist mainly in a positive sequence. Charging current may have a typical magnitude around 1 A/km for overhead lines. In Fig. 1, the power line is modelled with a π-model having a series resistance (R), series reactance (X), and shunt capacitance (C). In Fig. 1, the entire power line resistance and reactance is assumed to be lumped in the middle of the power line and half of the shunt capacitance is on either side. The charging current flows through the shunt capacitance. Although the charging current flows through all power lines during normal system operation (as well as during system transients), it is commonly overlooked in conventional methods for differential protection.

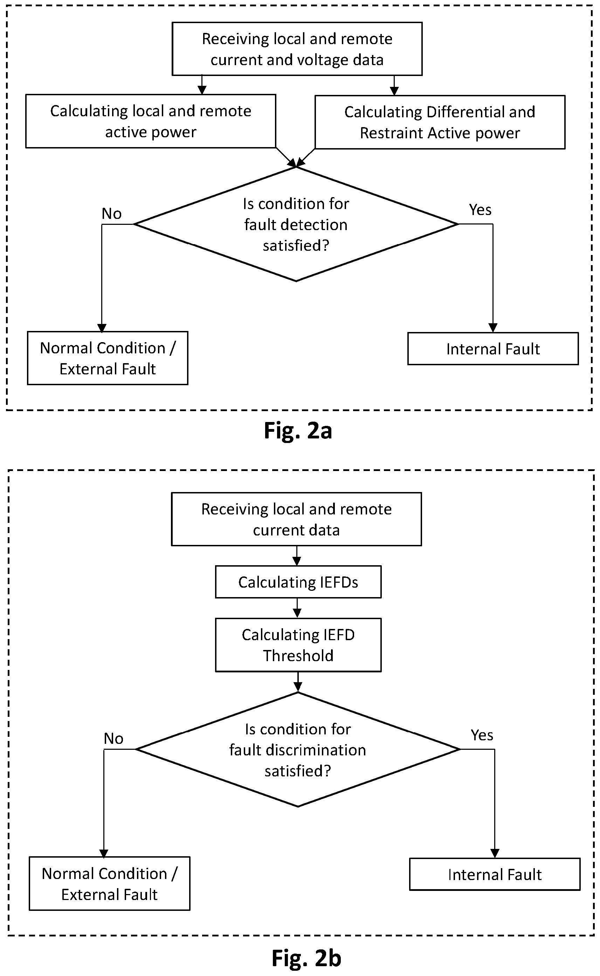

Fig. 2a schematically illustrates a flow chart of at least a portion of a method for differential protection according to some embodiments. The method comprises: receiving local and remote current and voltage data. The method comprises: calculating local and remote active power and/or calculating differential and restraint active power. The method comprises determining whether a plurality of internal fault conditions is satisfied based on a comparison of said local current and voltage data and said remote current and voltage data, and if said plurality of internal fault conditions are satisfied, generating a first tripping signal to a first circuit breaker CB1 to disconnect the power line PL from the first substation 101.

The local current and voltage data is indicative of each phase of local current and voltage, respectively, of the power line PL at the first substation 10₁. The remote current and voltage data is indicative of each phase of remote current and voltage, respectively, of the power line PL at the second substation 10₂.

An internal fault detection condition may be based on differential active power and restraint active power. In such a case, first and second internal fault detection conditions may be given by ${Diff}_{p , x} > {K}_{r} \times {Restraint}_{p , x}$ ${Diff}_{p , x} > {P}_{pickup _ setting}$ wherein differential active power *Diff*_{p,x} is based at least on a difference between a local active power based on received local current and voltage data and a remote active power based on received remote current and voltage data, and restraint active power *Restraint_{p,x}* is based at least on the local active power and the remote active power, and *P_{pickup_setting}* corresponds to a threshold level for the active power, wherein x indicates phase of current and voltage.

The active power *P_{x,local}, P_{x,remote}* for phase x at local and remote substations respectively may be calculated as ${P}_{x , local} = Re \left\{{U}_{x , local}{I}_{x , local}^{∗}\right\} = \left|{U}_{x , local}\right| \left|{I}_{x , local}\right| cos \left({θ}_{Ux , local}-{θ}_{Ix , local}\right)$ ${P}_{x , remote} = Re \left\{{U}_{x , remote}{I}_{x , remote}^{∗}\right\} = \left|{U}_{x , remote}\right| \left|{I}_{x , remote}\right| cos \left({θ}_{Ux , remote}-{θ}_{Ix , remote}\right)$ wherein *Re*{...} indicates real component, *θ_{Ux,local} - θ_{Ix,local}* is the phase difference between local voltage and local current, and *θ_{Ux,remote} - θ_{Ix,remote}* is the phase difference between remote voltage and remote current.

The differential active power of phase x may be calculated as ${Diff}_{p , x} = {P}_{x , local} + {P}_{x , remote}$

The restraint active power *Restraint_{p,x}* may be calculated as ${Restraint}_{p , x} = \left|{P}_{x , local}\right| + \left|{P}_{x , remote}\right|$

However, the first internal fault detection condition and the second internal fault detection are optional. The method may implement at least one other internal fault detection condition by which the method determines whether a (preliminary) internal fault is detected or not.

The method may comprise discriminating a (preliminary) internal fault detection based on at least one internal fault discrimination condition comprised in said plurality of internal fault conditions.

At least one internal fault discrimination condition comprising a first internal fault discrimination condition given by ${IEFD}_{x , local} or {IEFD}_{x , remote} > {IEFD}_{Th , x}$
wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , remote} = \frac{\left|{I}_{x , remote}\right|}{\left|{I}_{x , local}\right|}$
wherein *IEFD*_{Th,x} corresponds to an IEFD index threshold indicative of an internal fault. The IEFD index threshold may be a predetermined IEFD index threshold. However, according to one preferable embodiment, the IEFD index threshold is an adaptive IEFD index threshold based at least on the local current data and the remote current data.

Fig. 2b schematically illustrates a flow chart of at least a portion of a method for differential protection according to some embodiments. The method comprises receiving local and remote current data. The method comprises calculating the IEFD indices (IEFDs), both local and remote *IEFD*_{x,local} and *IEFD*_{x,remote}. The method comprises calculating the IEFD threshold.

The adaptive IEFD index threshold may be calculated and updated by ${IEFD}_{Th , x} = {IEFD}_{Th , x , 0} + \left(1-max\left(Δ{IEFD}_{x , local},Δ{IEFD}_{x , remote}\right)\right)$
wherein *IEFD*_{Th,x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$
wherein *IEFD*_{x,local,i} and *IEFD*_{x,local,i} correspond to samples of the respective IEFD indices and N indicates the number of samples. *IEFD*_{Th,x,0} is the initial threshold which can be selected to an appropriate value.

If said plurality of internal fault conditions is satisfied, generating a first tripping signal to a first circuit breaker CB₁ to disconnect the power line PL from the first substation 10₁.

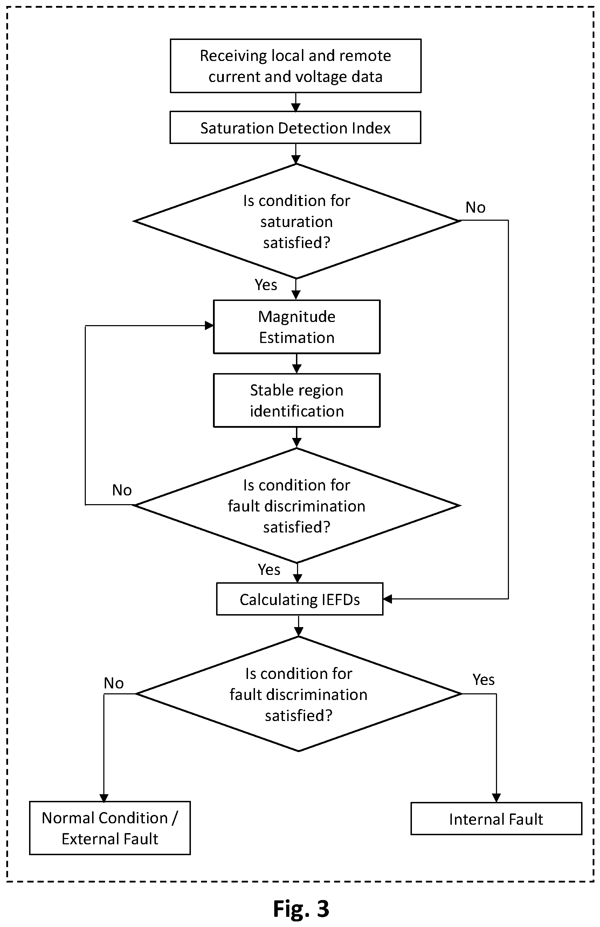

The method may further implement a CT saturation condition as exemplified in Fig. 3. In events of CT saturation, a magnitude of fault current may preferably be extracted in a way that is not impacted by CT saturation. To achieve this, the method may implement a three-step approach for accounting for CT saturation: CT saturation detection; identification of an unsaturated current interval for which magnitude estimation of fault current may be more accurate; magnitude estimation of the fault using the unsaturated interval.

Fig. 3 schematically illustrates a flow chart of at least a portion of a method for differential protection according to some embodiments. The method comprises receiving local and remote current and voltage data. The method comprises calculating a CT saturation detection index. If the CT saturation detection index indicates CT saturation, then the method performs magnitude estimation followed by stable region (unsaturated current interval) identification. If a stable region is identified, the method performs calculating the local and remote IEFD indices, then proceeds as described in relation to Fig. 2b (optionally updating IEFD threshold). However, if the CT saturation detection index does not indicate CT saturation, then the method performs IEFD calculation as described in relation to Fig. 2b. Further, if no stable region is identified, the method may perform magnitude estimation again.

CT saturation detection may be implemented as follows. The method may advantageously implement an index-based detection parameter for indicating a detection of CT saturation. The CT saturation index may be formulated as ${\overline{f}}_{saturation} = {\sum }_{k = 1}^{K} \frac{\left|{f}_{k}-{f}_{0}\right|}{K}$ wherein *f*₀ corresponds to fundamental frequency of the local and remote current being measured, *fₖ* corresponds to each frequency component, and *K* indicates a size of a window for which the difference between each frequency component *fₖ* and the fundamental frequency *f*₀ is averaged. As a non-limiting example, K is selected to provide a window having a size corresponding to a half-cycle of the fundamental frequency.

Without saturation, the frequency is almost constant and the value *f̅ₛₐₜᵤᵣₐₜᵢₒₙ* is approximately zero. However, if CT saturation occurs, the estimated frequency become oscillating and therefore, the deviation from fundamental frequency becomes significant. If CT saturation is detected, fast current magnitude estimation is preferred. If CT saturation is not detected, the method may proceed with processing local and remote current measurements for the purpose of detecting internal/external faults.

Upon CT saturation, a fault current, which has become asymmetrical, may be expressed as $i \left(t\right) = {I}_{dc} {e}^{- t / {τ}_{dc}} + {I}_{1} sin \left(2{πf}_{0}t+{θ}_{1}\right)$ wherein *I*₁ and *θ*₁ correspond to magnitude and phase angle of fundamental component of the fault current, respectively, *I_{dc}* and *τ_{dc}* correspond to magnitude and time constant of the DC component, respectively, and *f*₀ corresponds to the system frequency of the electrical power system (e.g., 50 or 60 Hz).

To consider the decaying DC component, Taylor expansion can be used to approximate the decaying DC component. As a result, the fault current can be approximately expressed as follows $i \left(k\right) \approx {I}_{dc} \left(1-\frac{t}{{τ}_{dc}}\right) + {I}_{1} cos \left({θ}_{1}\right) sin \left(2{πf}_{0}{kT}_{s}\right) + {I}_{1} sin \left({θ}_{1}\right) cos \left(2{πf}_{0}{kT}_{s}\right)$

The unknown variables of the Taylor expansion of the fault current may be identified by rewriting the Taylor expansion in matrix format for m consecutive samples, and then solving for the unknown variables by Least Squares (LS) method.

In matrix format, the Taylor expansion for m consecutive samples yields as follows. ${\left[{I}_{i}\right]}_{m \times 1} = {\left[{I}_{s}\right]}_{m \times 4} \times {\left[{I}_{x}\right]}_{4 \times 1}$ wherein [*Iᵢ*] is the matrix comprising the samples of current signals, [*Iₓ*] is the matrix comprising unknown variables, and [*Iₛ*] is the matrix comprising known components. The matrices [*Iᵢ*]*,* [*Iₓ*]*,* [*Iₛ*] may be expressed as ${\left[{I}_{i}\right]}_{m \times 1} = {\left[i\left(1\right) i\left(2\right) i\left(3\right) ⋯ i\left({mT}_{s}\right)\right]}^{T}$ ${\left[{I}_{x}\right]}_{4 \times 1} = {\left[{I}_{dc} -\frac{{I}_{dc}}{{τ}_{dc}} {I}_{1} cos\left({θ}_{1}\right) {I}_{1} sin\left({θ}_{1}\right)\right]}^{T}$ ${\left[{I}_{s}\right]}_{m \times 4} = \left[\begin{matrix}1 & {T}_{s} & sin \left(2{πf}_{0}{T}_{s}\right) & cos \left(2{πf}_{0}{T}_{s}\right) \\ 1 & 2 {T}_{s} & sin \left(2{πf}_{0}2{T}_{s}\right) & cos \left(2{πf}_{0}2{T}_{s}\right) \\ 1 & 3 {T}_{s} & sin \left(2{πf}_{0}3{T}_{s}\right) & cos \left(2{πf}_{0}3{T}_{s}\right) \\ ⋮ & ⋮ & ⋮ & ⋮ \\ 1 & {mT}_{s} & sin \left(2{πf}_{0}{mT}_{s}\right) & cos \left(2{πf}_{0}{mT}_{s}\right)\end{matrix}\right]$

The unknown variables may then be solved for by applying, e.g., LS-method as follows $\left[{I}_{x}\right] = \left[{\left[{\left[{I}_{s}\right]}^{T}\left[{I}_{s}\right]\right]}^{- 1}{\left[{I}_{s}\right]}^{T}\right] \left[{I}_{i}\right]$

By calculating [*Iₓ*]*,* the magnitude of the fault current is calculated as follows ${I}_{1} = \sqrt{{\left({I}_{x}\left(4\right)\right)}^{2} + {\left({I}_{x}\left(5\right)\right)}^{2}}$

The method comprises determining the local IEFD index and the remote IEFD index when a fault current (*i*_{f}) in the power line satisfies a stable fault current condition indicative of a stable fault current, which stable fault current condition is given by ${σ}_{{I}_{1}} < {σ}_{Ref}$ ${I}_{1 , m} > {I}_{1 , Ref}$ wherein *σ*_{*I*₁} corresponds to a standard deviation of the fault current, *σ*_{Ref} corresponds to a predetermined reference value for said standard deviation of the fault current, *I*_{1,m} corresponds to a magnitude of the fault current, and *I*_{1,Ref} corresponds to a predetermined reference value for said magnitude of the fault current.

As a non-limiting example, a straightforward index for detecting the stable region may be based on a standard deviation ${σ}_{{I}_{1}} = \sqrt{{\sum }_{m = 1}^{M} \frac{{\left({I}_{1 , m}-{\overline{I}}_{1 , m}\right)}^{2}}{M}}$ ${\overline{I}}_{1 , m} = {\sum }_{m = 1}^{M} \frac{{I}_{1 , m}}{M}$
wherein M is the number of samples for deciding whether an estimated magnitude of the fault current has become stable. The stable region is selected if the following condition is satisfied: ${σ}_{{I}_{1}} < {σ}_{Ref}$ ${I}_{1 , m} > {I}_{1 , Ref}$
wherein ${σ}_{Ref} = {K}_{σ} {σ}_{PF}$ ${I}_{1 , Ref} = {K}_{1} {I}_{1 , PF}$
wherein *σ_{PF}* is the pre-fault standard deviation for the current magnitude of a phase x, *I*_{1,*PF*} is the pre-fault current magnitude of phase x, and *K_{σ}, K*₁ are constants that may be specified in terms of value. The constants *K_{σ}, K*₁ may represent scaling factors and their values may be selected within an interval 1 to 2 or more than 2. As a non-limiting example, *K_{σ}* and/or *K*₁ may be equal to or greater than 2, which may advantageously improve accuracy in calculations or effects due to overload. In other words, the stable region is identified if the standard deviation of the estimated magnitude becomes lower than the reference value of the standard deviation, and simultaneously, the magnitude of the fault current becomes greater than the reference value of the magnitude of the current signal.

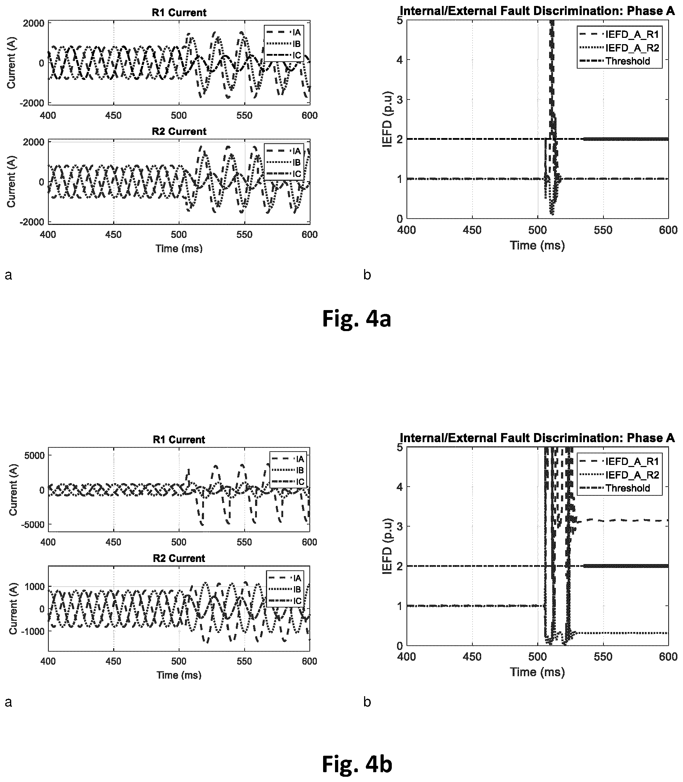

The above method was simulated for a 110 kV three-phase electrical power system comprising a 60 km long power line experiencing an external fault near the first bus BUS₁ outside the protected zone. The results are shown in Fig. 4a. Subfigure a of Fig. 4a shows both local (R1) and remote (R2) phase currents, phase A (IA, dashed line), phase B (IB, dotted line), and phase C (IC, semi-dashed line) of the power line PL. The horizontal axis represents Time in milliseconds (ms), while the vertical axis represents current magnitude in ampere (A). Subfigure b of Fig. 4a shows local and remote internal/external fault discrimination indices "IEFD_Ratio_R1" (dashed line), "IEFD_Ratio_R2" (dotted line), respectively, and the "Threshold" for internal fault discrimination (semi-dashed line) for phase A. In subfigure b of Fig. 4a, the horizontal axis represents Time (ms), while the vertical axis represents the value of the IEFD index in per unit system (p.u.). Here, IEFD_Ratio_R1 corresponds to *IEFD*_{x,local}, IEFD_Ratio_R2 corresponds to *IEFD*_{x,remote}, and Threshold corresponds to *IEFD*_{Th*,*x}*.* As shown in subfigure a of Fig. 4a, the simulated external fault causes a disturbance at approximately 500 ms. After this occurrence, the current phase A becomes deeply saturated due to CT saturation (deep CT saturation is indicated by deviation from sinusoidal wave form). As shown in subfigure b of Fig. 4a, the local IEFD index IEFD_A_R1 exceeds the Threshold, thus indicating a detection of a condition of CT saturation for current phase A. Due to the detection of CT saturation, the local protective relay delays generating a tripping signal to a circuit breaker CB₁. The local and remote IEFD indices are determined for a stable region of fault current. The local IEFD index IEFD_A_R1 falls below the threshold, i.e., it is not maintained above the threshold over time, thus indicating that the disturbance was due to an external fault.

The result of an internal fault is shown in Fig. 4b. Subfigure a of Fig. 4b shows both local (R1) and remote (R2) phase currents, phase A (IA, dashed line), phase B (IB, dotted line), and phase C (IC, semi-dashed line) of the power line PL. The horizontal axis represents Time in milliseconds (ms), while the vertical axis represents current magnitude in Ampere (A). Subfigure b of Fig. 4b shows local and remote internal/external fault discrimination indices "IEFD_Ratio_R1" (dashed line), "IEFD_Ratio_R2" (dotted line), respectively, and the "Threshold" for internal fault discrimination (semi-dashed line) for phase A. In subfigure b of Fig. 4b, the horizontal axis represents Time (ms), while the vertical axis represents the value of the IEFD index in per unit system (p.u.). Here, IEFD_Ratio_R1 corresponds to *IEF*D_{x,local}, IEFD_Ratio_R2 corresponds to *IEFD*_{x,remote}, and Threshold corresponds to *IEFD*_{Th*,*x}*.* As shown in subfigure a of Fig. 4b, the simulated internal fault causes a disturbance at approximately 500 ms. As shown in subfigure b of Fig. 4b, the local IEFD index IEFD_A_R1 exceeds the Threshold, and is maintained above the threshold over time, thus indicating that the disturbance was due to an internal fault.

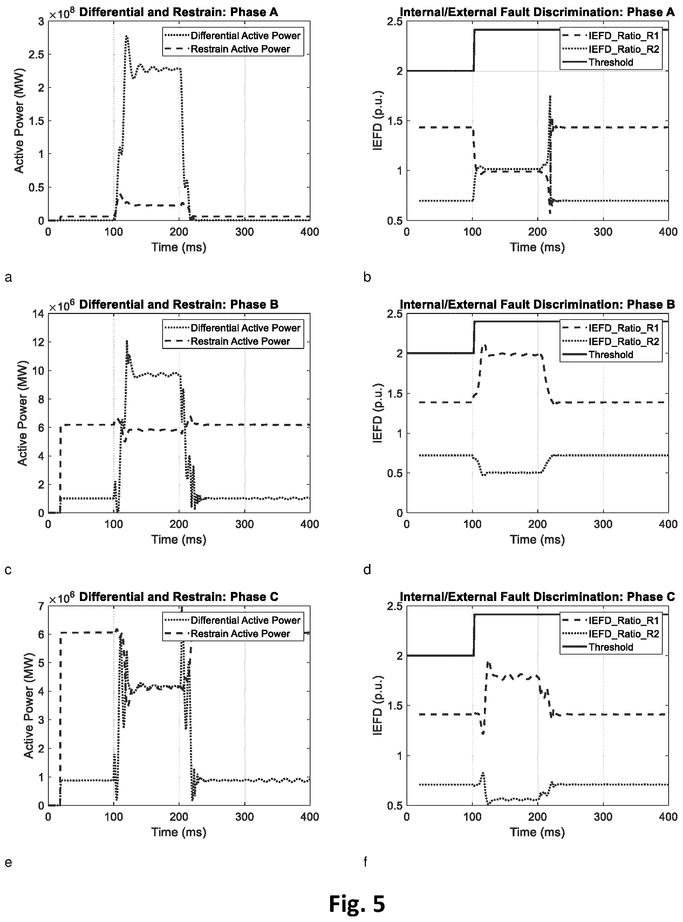

Fig. 5 illustrates graphs of various aspects of the electrical power system when at least partially protected by a method for differential protection according to some embodiments. In particular, the method, when implementing active power-based internal fault detection, was simulated for a 110 kV three-phase electrical power system comprising a 60 km long power line experiencing an external fault near the first bus BUS₁ outside the protected zone. The results are shown in Fig. 5. Subfigure a of Fig. 5 shows the differential active power (dotted line) and the restraint active power (dashed line) for Phase A. The horizontal axis represents Time in milliseconds (ms), while the vertical axis represents Active Power in Megawatts (MW). Subfigure c of Fig. 5 shows the differential active power (dotted line) and the restraint active power (dashed line) for Phase B. The horizontal axis represents Time (ms), while the vertical axis represents Active Power (MW). Subfigure e of Fig. 5 shows the differential active power (dotted line) and the restraint active power (dashed line) for Phase C. The horizontal axis represents Time (ms), while the vertical axis represents Active Power (MW). Subfigures b, d, f of Fig. 5 show internal/external fault discrimination "IEFD_Ratio_R1" (dotted line), "IEFD_Ratio_R2" (dashed line) and the "Threshold" for internal fault discrimination (solid line) for the respective phases A, B, C. In each subfigure b, d, f, the horizontal axis represents Time (ms), while the vertical axis represents the value of the IEFD index in per unit system (p.u.). Here, IEFD_Ratio_R1 corresponds to *IEF*D_{x,local}, IEFD_Ratio_R2 corresponds to *IEFD*_{x,remote}, and Threshold corresponds to *IEFD*_{Th*,*x}*.* As shown in subfigures a, c, e of Fig. 5, the simulated external fault causes a disturbance between approximately 100 ms and 200 ms. During this time interval, the differential active power for phase A, phase B, and phase C become elevated and larger than their restraint active power (over time or intermittently). As shown in subfigures b, d, f of Fig. 5, the local and remote IEFD index for the respective phases remain below the IEFD index threshold, thus discriminating the simulated external fault indeed as an external fault for all phases. Thus, maloperation of the first protective relay and the second protective relay is avoided.

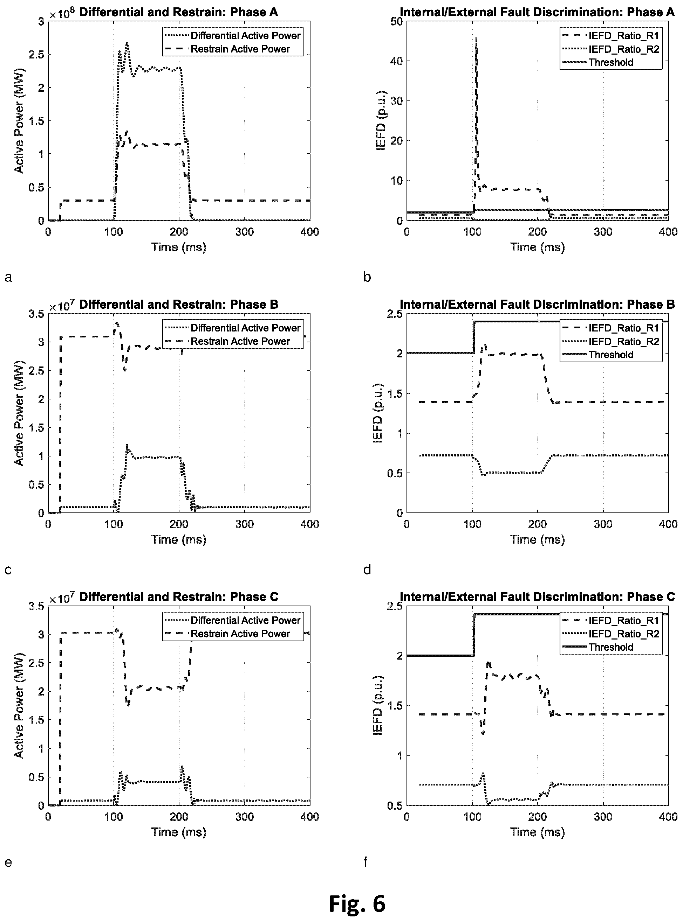

Also, the method, when implementing active power-based internal fault detection, was simulated for a 110 kV three-phase electrical power system comprising a 60 km long power line experiencing an internal fault. The results are shown in Fig. 6. Subfigure a of Fig. 6 shows the differential active power (dotted line) and the restraint active power (dashed line) for Phase A. The horizontal axis represents Time in milliseconds (ms), while the vertical axis represents Active Power in Megawatts (MW). Subfigure c of Fig. 6 shows the differential active power (dotted line) and the restraint active power (dashed line) for Phase B. The horizontal axis represents Time (ms), while the vertical axis represents Active Power (MW). Subfigure e of Fig. 6 shows the differential active power (dotted line) and the restraint active power (dashed line) for Phase C. The horizontal axis represents Time (ms), while the vertical axis represents Active Power (MW). Subfigures b, d, f of Fig. 6 show internal/external fault discrimination "IEFD_Ratio_R1" (dotted line), "IEFD_Ratio_R2" (dashed line) and the "Threshold" for internal fault discrimination (solid line) for the respective phases A, B, C. In each subfigure b, d, f, the horizontal axis represents Time (ms), while the vertical axis represents the value of the IEFD index in per unit system (p.u.). Here, IEFD_Ratio_R1 corresponds to *IEF*D_{x,local}, IEFD_Ratio_R2 corresponds to *IEFD*_{x,remote}, and Threshold corresponds to *IEFD*_{Th*,*x}*.* As shown in subfigures a, c, e of Fig. 6, the simulated external fault causes a disturbance between approximately 100 ms and 200 ms. During this time interval, the differential active power for phase A becomes elevated and larger than the corresponding restraint active power, while for phase B and phase C, the respective differential active powers remain below the restraint active power during this time interval. As shown in subfigures b, d, f of Fig. 6, the local IEFD index for phase A crosses over and is larger than the IEFD threshold, thus indicating the simulated internal fault indeed as an internal fault.

The method for differential protection disclosed herein can robustly detect the internal fault of a (MV) power line. Moreover, the method can distinguish between internal fault and external fault for all cases, in particular faults near busbars with the help of using new IEFD indices. Further, the method may be phasor-based, meaning that locally calculated phasors of current and voltages are communicated through the communication link leading to smaller impact from non-dedicated communication networks. The method may also provide a phase segmented differential protection (due to nature of IEFD) and therefore can distinguish a faulted phase compared to other methods of differential protection. The method may advantageously tolerate high fault impedance and time-synchronization errors up to 20 milliseconds or more depending on implementation. The sensitivity of imperfect communication condition can be adjusted by monitoring network traffic, etc. This advantageously allows the method to be more reliable considering non-dedicated communication network characteristics.

The method for differential protection may be implemented by at least one protective relay R₁, R₂. A differential protective system may comprise the at least one protective relay R₁, R₂. The differential protective system may provide differential protection of a power line PL (or a component in general) electrically connected between a first substation 10₁ of an electrical power system EPS and a second substation 10₂. The differential protective system may be configured to be arranged at the first substation 10₁ and be communicatively connected to at least a first circuit breaker CB₁ for disconnecting the power line PL (or the component in general) from the first substation 10₁. A second cooperating protective system may be arranged at the second substation 10₂. The second protective system may comprise a second protective relay configured to implement the method for differential protection herein disclosed. The second protective relay may be configured to generate a second tripping signal to a second circuit breaker CB₂ when the plurality of internal fault conditions is satisfied to disconnect the power line PL (or the component in general) from the second substation 10₂. Also, in some embodiments, the method implements internal fault detection based solely on differential current. In such embodiments, the first protective relay may receive only remote current data from the second protective relay rather than remote current and voltage data.

While the foregoing is directed to embodiments of the disclosure, other and further embodiments may be devised without departing from the inventive concept discussed herein. The scope of the invention is however determined by the claims.

## Claims

1. A method for differential protection of a power line (PL) electrically connected between a first substation (10₁) and a second substation (10₂) of an electrical power system (EPS), the method implemented by at least a first protective relay arranged at the first substation (10₁), the method comprising:
receiving local current data indicative of a local current *I*_{x,local} in the power line (PL) at the first substation (10₁) and remote current data indicative of a remote current *I*_{x,remote} in the power line (PL) at the second substation (10₂);
determining whether a plurality of internal fault conditions is satisfied based on a comparison of said local current data and said remote current data, and
if said plurality of internal fault conditions is satisfied, generating a first tripping signal to a first circuit breaker (CB₁) to disconnect the power line (PL) from the first substation (10₁),
wherein said plurality of internal fault conditions comprises:
at least one internal fault discrimination condition comprising a first internal fault discrimination condition given by ${IEFD}_{x , local} or {IEFD}_{x , remote} > {IEFD}_{Th , x}$
wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , remote} = \frac{\left|{I}_{x , remote}\right|}{\left|{I}_{x , local}\right|}$
wherein *IEFD*_{Th,x} corresponds to an IEFD index threshold indicative of an internal fault, and x indicates any one phase of the power line.

2. The method according to claim 1, wherein the IEFD index threshold is a predetermined IEFD index threshold.

3. The method according to claim 1, wherein the IEFD index threshold is an adaptive IEFD index threshold based at least on the local current data and the remote current data.

4. The method according to claim 3, wherein the adaptive IEFD index threshold is updated by ${IEFD}_{Th , x} = {IEFD}_{Th , x , 0} + \left(1-max\left(Δ{IEFD}_{x , local},Δ{IEFD}_{x , remote}\right)\right)$
wherein *IEFD*_{Th,x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$
wherein *IEFD*_{x,local,i} and *IEFD*_{x,local,i} correspond to samples of the respective IEFD indices and N indicates the number of samples.

5. The method according to any of the preceding claims, wherein the local current data and the remote current data comprise sample-based values and/or phasor-based values of the local current and the remote current, respectively.

6. The method according to claim 5, wherein the local current data and the remote current data comprise phasor-based values of the local current and the remote current, respectively, wherein said at least one internal fault discrimination condition comprises a second internal fault discrimination condition indicating whether the local IEFD index and the remote IEFD index account for current transformer, CT, saturation.

7. The method according to claim 6, wherein, during an event of CT saturation, a sampling rate of the local current *I*_{x,local} and the remote current *I*_{x,remote} is selected based on at least one characteristic of the CT saturation.

8. The method according to claim 6 or 7, comprising determining the local IEFD index and the remote IEFD index when a fault current (*i*_{f}) in the power line satisfies a stable fault current condition indicative of a stable fault current, which stable fault current condition is given by ${σ}_{{I}_{f}} < {σ}_{Ref}$ ${I}_{f , m} > {I}_{f , Ref}$ wherein *σ_{I_{f}}* corresponds to a standard deviation of the fault current, *σ*_{Ref} corresponds to a predetermined reference value for said standard deviation of the fault current, *I*_{f,m} corresponds to a magnitude of the fault current, and *I*_{f,Ref} corresponds to a predetermined reference value for said magnitude of the fault current.

9. The method according to any one of claims 1-8, wherein the method is implemented by the first protective relay (R₁) and a second protective relay (R₂), wherein the first tripping signal is generated by the first protective relay (R₁) to activate the first circuit breaker (CB₁) and a second tripping signal is generated by the second protective relay (R₂) to activate a second circuit breaker (CB₂) for disconnecting the power line (PL) from the second substation (10₂).

10. The method according to claim 9, wherein the first tripping signal and the second tripping signal are only generated when the first protective relay (R₁) and the second protective relay (R₂) have exchanged information indicating that at least one of the first protective relay (R₁) and the second protective relay (R₂) has determined that the at least one internal fault condition is satisfied.

11. The method according to any one of the preceding claims, wherein a communication link between the first substation and the second substation is established via a non-dedicated communication network or an optical fiber cable.

12. The method according to any one of the preceding claims, wherein the method is applied for each phase of currents in the power line comprising three phase conductors.

13. A differential protective system of differential protection of a power line (PL) electrically connected between a first substation (10₁) of an electrical power system (EPS) and a second substation (10₂), the differential protective system configured to be arranged at the first substation (10₁) and be communicatively connected to at least a first circuit breaker (CB₁) for disconnecting the power line (PL) from the first substation (10₁), the protective system comprising:
at least one protective relay configured to perform the method according to any one of claims 1-11.

14. Electrical power system comprising:
a first substation (10₁) comprising a first circuit breaker (CB₁);
a power line (PL) configured to be electrically connected between the first substation (10₁) and a second substation (10₂), and
the differential protective system according to claim 13, wherein a first protective relay of the at least one protective relay is arranged at the first substation.

15. The electrical power system according to claim 14, comprising the second substation (10₂), wherein a second protective relay of the at least one protective relay is arranged at the second substation (10₂).
